**Europäisches Patentamt**

**European Patent Office**

**Office européen des brevets**

(11) Numéro de publication : **0 479 657 A1**

# (12) DEMANDE DE BREVET EUROPEEN

(21) Numéro de dépôt : **91402597.8**

(22) Date de dépôt : **30.09.91**

(51) Int. Cl.⁵ : **C04B 37/00, F28F 21/04, C04B 35/56**

(30) Priorité : **04.10.90 FR 9012240**

(43) Date de publication de la demande :
**08.04.92 Bulletin 92/15**

(84) Etats contractants désignés :
**DE FR GB**

(71) Demandeur : **CERAMIQUES ET COMPOSITES
Les Miroirs - Défense 3, 18, avenue d'Alsace
F-92400 Courbevoie (FR)**

(72) Inventeur : **Azema, Olivier
39, rue Massey
F-65000 Tarbes (FR)**
Inventeur : **Bergé, Roland
44, rue Jean Moulin
F-65320 Bordères-sur-Echez (FR)**
Inventeur : **Martines, Ginès
3, Place de la Providence
F-65000 Tarbes (FR)**

(74) Mandataire : **Dubruc, Philippe et al
RHONE-POULENC CHIMIE Service
IOM/BREVETS, 25,quai Paul Doumer
F-92408 Courbevoie (FR)**

(54) **Procédé d'assemblage d'objets en carbure de silicium et assemblages ainsi obtenus.**

(57)    La présente invention concerne un procédé d'assemblage d'objets à base de carbure de silicium.

Ce procédé est caractérisé en ce qu'on insère un premier objet (12) à base de carbure de silicium à l'état fritté ou partiellement fritté dans un second objet (13) à base de carbure de silicium à l'état cru, et on porte l'ensemble ainsi obtenu à une température au moins égale à la température de frittage du carbure de silicium.

Un tel procédé peut être utilisé notamment pour la fabrication d'échangeurs de chaleur.

EP 0 479 657 A1

La présente invention concerne un procédé d'assemblage d'objets ou de pièces en carbure de silicium ainsi que les assemblages obtenus par ce procédé.

La liaison entre deux objets en carbure de silicium (SiC) est un problème important et délicat.

C'est en effet un problème important puisqu'il se pose dans tous les dispositifs où l'on doit assembler des éléments en SiC. D'autre part la liaison ou l'assemblage doit pouvoir résister à la corrosion, à la température et notamment aux chocs thermiques. De plus, cette liaison doit assurer une étanchéité aussi parfaite que possible.

Généralement, les liaisons entre éléments en SiC se font par l'intermédiaire de matériaux de liaisons.

Ces matériaux peuvent être de nature métallique, ce sont par exemple les alliages pour brasage ou soudage par diffusion. Dans le cas par exemple des éléments en SiSiC, le silicium peut jouer ce rôle de matériau de liaison. Ils peuvent être aussi de nature organique comme les colles, ou inorganiques comme les ciments réfractaires ou les verres.

Toutefois l'utilisation de ces matériaux de liaison n'est pas satisfaisante.

En effet, les liaisons obtenues présentent généralement une faible résistance à la corrosion et en réfractarité et leur résistance mécanique est aussi faible. Ceci limite les conditions d'utilisation des assemblages par rapport à celles qu'on pourrait attendre d'un matériau comme le SiC.

Il faut noter en plus que les différences des propriétés mécaniques et physico-chimiques entre le matériau de liaison et le SiC engendrent, au cours du temps, des dégradations de la liaison et limitent ainsi la fiabilité des assemblages notamment en ce qui concerne l'étanchéité. D'autre part les techniques de soudage - brasage sont limitées à de faibles épaisseurs de joints.

L'objet de l'invention est un procédé d'assemblage d'objets ou de pièces en SiC ne mettant pas en oeuvre de matériau de liaison et permettant d'obtenir une liaison à résistance élevée à la corrosion et à la fatigue thermique et présentant une très bonne tenue mécanique et une étanchéité parfaite.

Dans ce but, le procédé selon l'invention d'assemblage d'objets à base de carbure de silicium est caractérisé en ce qu'on insère un premier objet à base de carbure de silicium à l'état fritté, ou partiellement fritté, dans un second objet à base de carbure de silicium à l'état cru et on porte l'ensemble ainsi obtenu à une température au moins égale à la température de frittage du carbure de silicium.

L'invention concerne aussi l'assemblage obtenu par un tel procédé, c'est-à-dire un assemblage comprenant au moins deux objets à base de carbure de silicium caractérisé en ce qu'il est obtenu par insertion d'au moins un premier objet à base de carbure de silicium à l'état fritté, ou partiellement fritté, dans un second objet à base de carbure de silicium à l'état cru, puis traitement thermique de l'ensemble ainsi obtenu à une température au moins égale à la température de frittage du carbure de silicium.

L'invention concerne enfin un assemblage comprenant au moins deux objets à base de carbure de silicium, un premier inséré dans un second et qui est caractérisé en ce que la liaison entre les deux objets est une liaison carbure de silicium - carbure de silicium par frittage.

D'autres caractéristiques, détails et avantages de l'invention apparaîtront plus clairement à la lecture de la description qui va suivre faite en référence aux dessins annexés dans lesquels :

– la figure 1 illustre un exemple d'assemblage selon l'art antérieur;
– la figure 2 illustre le procédé de l'invention pour un assemblage selon une première variante;
– la figure 3 illustre le procédé de l'invention pour un assemblage selon une seconde variante;
– la figure 4 illustre un assemblage réalisé en mettant en oeuvre le procédé de l'invention.

L'invention s'applique à l'assemblage de tout élément ou pièce en SiC quels que soient leur forme, leur type, ou leurs dimensions. De même, elle s'applique à tout matériau en SiC quel que soit le type de SiC par exemple $\alpha$ et/ou $\beta$ et notamment aux matériaux constitués uniquement de SiC aux impuretés habituelles près, plus généralement, on peut appliquer le procédé de l'invention aux matériaux à base de SiC, c'est-à-dire aux matériaux pouvant contenir d'autres éléments comme par exemple les matériaux ou composites comprenant du SiC et du carbone.

Enfin les objets ou éléments en SiC constituant l'assemblage peuvent avoir été obtenus par tout procédé connu tels que par exemple extrusion, pressage isostatique ou uniaxial, coulage ou injection.

Dans le procédé de l'invention, on utilise tout d'abord un premier objet à base de SiC à l'état fritté ou partiellement fritté. Par partiellement fritté, on entend ici un produit qui a subi au moins en partie un traitement de frittage, c'est-à-dire au moins un traitement thermique qui a assuré l'élimination des liants de mise en forme et permis d'obtenir une masse volumique d'au moins 70% de la masse volumique théorique.

Comme indiqué plus haut, ce premier objet ou élément peut présenter une forme quelconque (tube, embout, arbre, plaque par exemple), il suffit qu'il puisse être inséré dans le deuxième objet constituant l'assemblage, le premier objet formant ainsi l'élément male et le second, l'élément femelle de l'assemblage. On notera ici qu'il n'est pas nécessaire que le premier élément soit inséré dans son intégralité dans le second et qu'il va de soi qu'il suffit qu'il y soit inséré au moins en partie.

Le second objet de l'assemblage est à l'état cru ou non fritté. On entend par là généralement un produit qui présente une masse volumique comprise entre 1,8 et 2,40 g/cm³ soit 56 et 74% de la masse volumique théorique mesurée sur le produit contenant les liants de mise en forme soit entre 1,57 et 2,28 g/cm³, soit encore 48 - 70% de la masse volumique théorique pour un produit exempt de tout liant. En tout état de cause, on se place dans des conditions telles qu'au moment de l'assemblage et avant le traitement thermique, la densité à l'état cru du second objet est inférieure à la densité du premier objet.

Bien entendu, le second élément peut comprendre dans sa composition tous les additifs habituels et connus pour un matériau à l'état cru. Il peut ainsi comprendre un liant organique, une source de carbone comme additifs de frittage, du type résine organique carbonisable, et tout autre additif de frittage comme le bore par exemple.

Comme on l'a vu plus haut aussi, sa forme peut être absolument quelconque (plaque à tube, baffle, tube etc...) dans la mesure où elle lui permet de venir enserrer au moins en partie le premier élément.

L'étape suivante du procédé consiste à traiter thermiquement l'ensemble des deux objets obtenu par insertion de l'un dans l'autre. Ce traitement se fait à une température au moins égale à celle du frittage du carbure de silicium en vue d'obtenir le frittage du second corps qui est encore à l'état cru.

Les conditions de frittage du SiC sont bien connues de l'homme du métier et sont en dehors de la présente invention.

On sait que la température de frittage se situe généralement entre 1900 et 2500°C et plus particulièrement entre 2000 et 2200°C et qu'on procède au frittage sous vide et/ou sous une atmosphère d'un gaz du type argon, monoxyde ou dioxyde de carbone, hélium, hydrogène, azote par exemple.

Le frittage est conduit de manière à obtenir un produit présentant généralement une densité d'au moins 95% de la densité théorique, et plus particulièrement d'au moins 98% de la densité théorique.

Lors du frittage, il se produit un retrait du second objet qui vient ainsi serrer très fortement le premier objet. Bien entendu, le jeu initial entre les deux objets aura été calculé de manière telle que la force de serrage ainsi obtenue ne puisse pas entraîner des fissurations ou des fêlures sur ceux-ci.

Ce serrage mécanique contribue à l'établissement de la liaison entre les deux objets. Mais on a pu observer en plus d'une manière inattendue qu'il y avait diffusion et interpénétration des grains de SiC à l'interface entre les deux pièces. En d'autres termes, on observe un frittage à cette interface. Il est d'ailleurs impossible de distinguer une interface entre les deux objets sur les photographies prises au microscope électronique après le traitement thermique.

Un tel type de liaison SiC-SiC, c'est-à-dire une liaison homogène sans intercalation d'un autre matériau et par frittage c'est-à-dire avec disparition de l'interface entre les deux objets comme décrit plus haut, présente plusieurs avantages.

Cette liaison résiste particulièrement bien à la corrosion dans de nombreux environnements gazeux et/ou liquides.

On observe par ailleurs une excellente résistance aux chocs et à la fatigue thermique. Aucune dégradation n'a pu ainsi être notée après 100 cycles de 0 à 1500°C en milieu oxydant.

La liaison assure aussi une étanchéité parfaite au moins jusqu'à un ΔP de 15 bars dans les liquides acides ou basiques.

Ce type de liaison permet d'obtenir des assemblages homogènes, c'est-à-dire entièrement en SiC et donc pouvant être utilisés au maximum des conditions d'utilisation de celui-ci. Ce n'est pas le cas dans les assemblages mettant en oeuvre des matériaux de liaison. Ces assemblages sont eux, limités aux conditions d'utilisation de ces matériaux de liaison qui sont moins performants que le SiC.

Des exemples non limitatifs de réalisation vont maintenant être donnés.

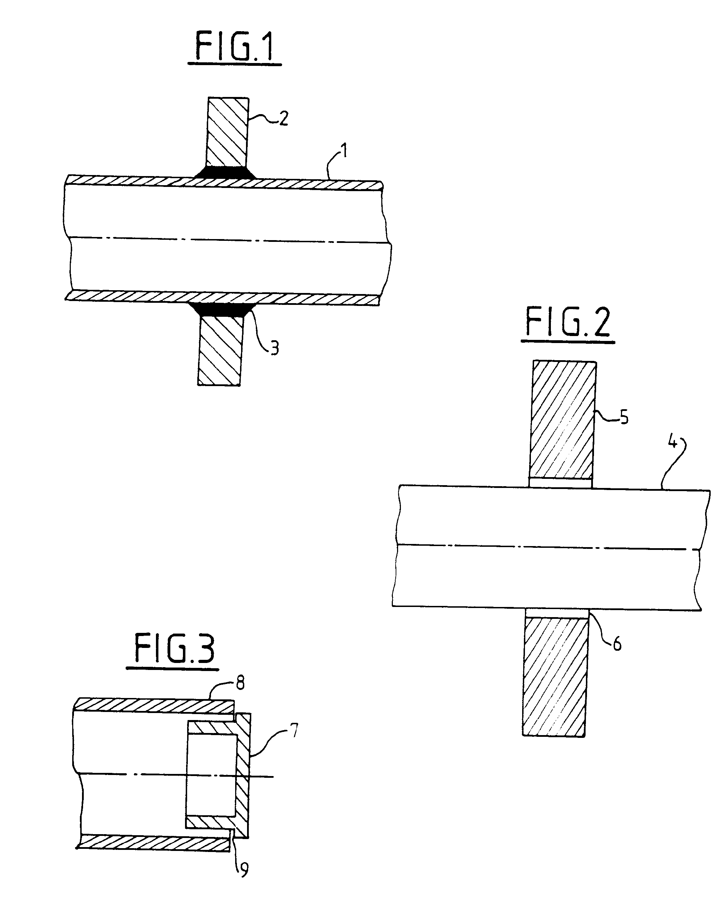

La figure 1 illustre un exemple d'assemblage selon l'art antérieur dans lequel un tube 1 en SiC est lié à une plaque à tube 2 en SiC par l'intermédiaire d'un matériau de liaison 3.

La figure 2 montre un assemblage selon une première variante de l'invention entre un tube 4 en SiC dans un flasque ou une plaque à tube 5 en SiC aussi. La figure montre le montage avant le traitement thermique. Le tube 4 a été préalablement fritté. Il est placé avec un certain jeu 6 dans la plaque 5 qui est elle encore à l'état cru.

La figure 3 montre une seconde variante de l'invention. Il s'agit cette fois d'un embout 7 en SiC fritté qui est placé à l'extrémité d'un tube 8 en SiC à l'état cru avec un jeu 9.

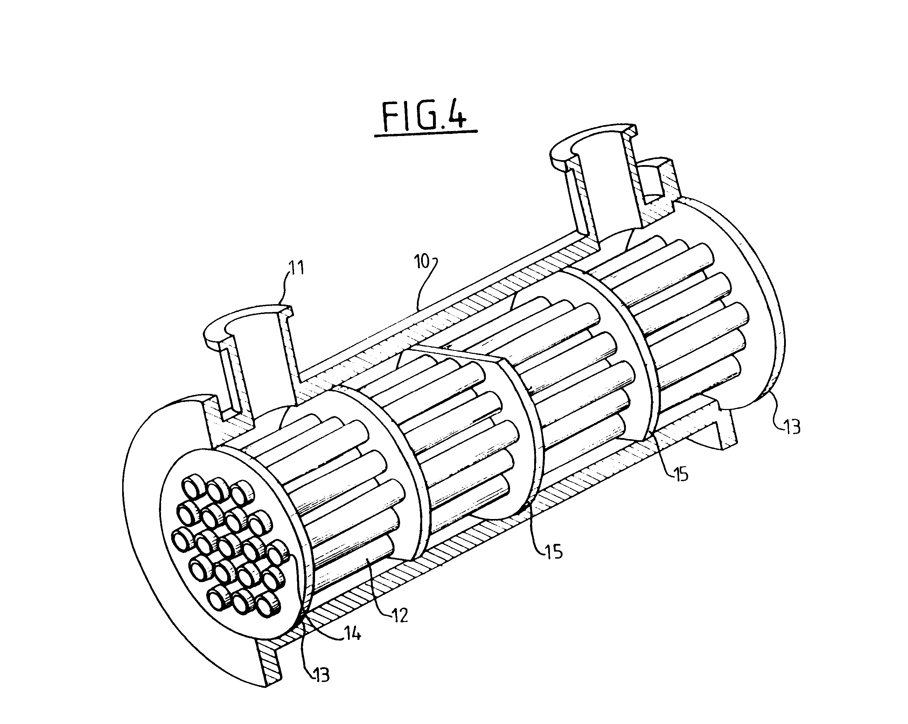

La figure 4 illustre un exemple d'appareillage mettant en oeuvre le procédé de l'invention.

Il s'agit d'un échangeur de chaleur de structure bien connue et constitué d'une calandre 10, qui peut être en verre, en acier ou acier émaillé ou en céramique, munie d'entrées 11 et dans laquelle est disposé un faisceau de tube en SiC 12.

Les tubes 12 sont placés ou insérés dans des plaques à tube en SiC 13. Les liaisons 14 tube - plaque à tube ont été réalisées selon le procédé de l'invention, ce qui se révèle particulièrement intéressant dans le cas d'un tel appareil, car il faut bien sûr une étanchéité parfaite pour ces liaisons de manière à bien séparer les fluides.

L'échangeur peut encore comporter des baffles 15 en SiC avec lesquels on peut prévoir aussi au moins pour un certain nombre de tubes, une liaison du type de l'invention.

De nombreuses variantes de l'invention sont aussi concevables.

Par exemple, on peut imaginer des assemblages constitués par des plaques formant ainsi le second objet au sens de l'invention et comportant des rainures dans lesquelles sont insérés des tiroirs ou d'autres plaques. De tels assemblages peuvent être utilisés dans des échangeurs à plaques.

L'invention s'applique aussi par exemple à l'insertion d'objets du type ailettes ou pions dans des plaques, notamment dans des montages de déflecteurs.

## Revendications

1 - Procédé d'assemblage d'objets à base de carbure de silicium, caractérisé en ce qu'on insère un premier objet à base de carbure de silicium à l'état fritté ou partiellement fritté dans un second objet à base de carbure de silicium à l'état cru, et on porte l'ensemble ainsi obtenu à une température au moins égale à la température de frittage du carbure de silicium.

2 - Procédé selon la revendication 1, caractérisé en ce que le premier objet est un tube ou un arbre et le second objet un flasque ou une plaque à tube.

3 - Procédé selon la revendication 1, caractérisé en ce que le premier objet est un embout et le second objet un tube.

4 - Assemblage comprenant au moins deux objets à base de carbure de silicium, caractérisé en ce qu'il est obtenu par insertion d'au moins un premier objet à base de carbure de silicium à l'état fritté ou partiellement fritté dans un second objet à base de carbure de silicium à l'état cru, puis traitement thermique de l'ensemble ainsi obtenu à une température au moins égale à la température de frittage du carbure de silicium.

5 - Assemblage comprenant au moins deux objets à base de carbure de silicium, un premier inséré dans un second, caractérisé en ce que la liaison entre les deux objets est une liaison carbure de silicium - carbure de silicium par frittage.

6 - Assemblage selon la revendication 4 ou 5 caractérisé en ce que le premier objet est un tube ou un arbre et le second objet un flasque ou une plaque à tube.

7 - Assemblage selon la revendication 4 ou 5, caractérisé en ce que le premier objet est un embout et le second un tube.

8 - Assemblage selon l'une des revendications 4, 5 ou 6 du type échangeur de chaleur, caractérisé en ce qu'il comprend un ou une série de tubes insérés dans au moins une plaque à tube, et éventuellement dans au moins un baffle.

9 - Assemblage selon l'une des revendications 4 à 6 du type échangeur à plaques, caractérisé en ce qu'il comprend un ou plusieurs tiroirs insérés dans des plaques.

## FIG.1

## FIG.2

## FIG.3

# FIG.4

EP 0 479 657 A1

Office européen
des brevets

## RAPPORT DE RECHERCHE EUROPEENNE

Numero de la demande

EP 91 40 2597

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 007 374 (NGK INSULATORS, LTD) * Revendication 1; figure 3; page 3, ligne 1 - page 4, ligne 18; page 5, lignes 18-26; page 7, lignes 20-32; page 8, ligne 24 - page 10, ligne 13 * | 1,4-5 | C 04 B 37/00 F 28 F 21/04 C 04 B 35/56 |
| Y | --- | 2-3,6-9 | |
| Y | US-A-3 564 328 (R.D. BAGLEY et al.) * Abrégé; figure 3; colonne 2, lignes 16-39; colonne 3, lignes 3-49; colonne 4, lignes 30-75; colonne 7, lignes 3-20 * | 2-3,6-7 | |
| Y | --- US-A-4 222 434 (R.A. CLYDE) * Colonne 2, ligne 33 - colonne 4, ligne 6; colonne 6, ligne 36 - colonne 7, ligne 4; colonne 7, ligne 65 - colonne 9, ligne 8; revendications 1-2,9-10,20 * | 8-9 | |
| X | --- US-A-4 332 295 (LAHAYE et al.) * Abrégé; revendications 1-2,4-6; colonne 1, ligne 31 - colonne 2, ligne 2; colonne 2, lignes 33-56; colonne 3, lignes 9-30; colonne 4, ligne 32 - colonne 5, ligne 34 * | 1,4-5 | **DOMAINES TECHNIQUES RECHERCHES (Int. Cl.5)** C 04 B F 28 F |
| A | --- | 8 | |
| A | DE-A-3 122 345 (ROSENTHAL TECHNIK AG) * Abrégé; revendications 1,3,5; page 5, ligne 13 - page 6, ligne 3; page 8, ligne 24 - page 10, ligne 6 * --- -/- | 1,4-5 | |

Le présent rapport a été établi pour toutes les revendications

| Lieu de la recherche | Date d'achèvement de la recherche | Examinateur |
|---|---|---|
| LA HAYE | 28-11-1991 | NORGREN-OLSSON |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................

& : membre de la même famille, document correspondant

EPO FORM 1503 03.82 (P0402)

Office européen

des brevets

**RAPPORT DE RECHERCHE EUROPEENNE**

Numero de la demande

EP  91 40 2597

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 831 812  (INTERATOM GmbH)<br>* Abrégé; revendication 1; colonne 1, ligne 25 - colonne 2, ligne 16 *<br>----- | 1-2,4-6 ,8 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 28-11-1991 | NORGREN-OLSSON |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.....................................................................................
& : membre de la même famille, document correspondant

EPO FORM 1503 03.82 (P0402)